# EUROPÄISCHE PATENTSCHRIFT

(11) **EP 3 442 847 B1**
(45) Veröffentlichungstag und Bekanntmachung des Hinweises auf die Patenterteilung: **30.08.2023**
(21) Anmeldenummer: 17713656.1
(22) Anmeldetag: 27.03.2017
(51) Int. Cl.: B61G 9/04, B61G 9/06, B61G 11/16

(54) **ZUG- UND STOSSEINRICHTUNG**
PULL AND PUSH MEANS
DISPOSITIF DE TRACTION ET DE POUSSÉE

(30) Priorität: 11.04.2016 DE 102016205981
(43) Veröffentlichungstag der Anmeldung: 20.02.2019
(73) Patentinhaber: Voith Patent GmbH, 89522 Heidenheim (DE)
(72) Erfinder: SCHÜLER, Martin, 42929 Wermelskirchen (DE)
(74) Vertreter: Voith Patent GmbH - Patentabteilung
(86) Internationale Anmeldenummer: PCT/EP2017/057172
(87) Internationale Veröffentlichungsnummer: WO 2017/178213

(56) Entgegenhaltungen:
- EP-A1- 2 072 370
- EP-A1- 2 851 260
- EP-A2- 1 637 426
- WO-A1-2016/026708
- US-A1- 2002 070 189

## Beschreibung

Die Erfindung betrifft eine Zug- und Stoßeinrichtung, im Einzelnen mit den Merkmalen aus dem Oberbegriff von Anspruch 1.

Die Druckschrift EP 2 335 996 B1 offenbart eine Mittelpufferkupplung mit einer zumindest zweiteilig ausgebildeten Kupplungsstange, die über einen Zugbügel am Wagenkasten befestigt ist, wobei der hintere Kupplungsstangenabschnitt relativ zu dem Zugbügel in Längsrichtung verschiebbar mit dem Wagenkasten verbunden ist. Zwischen dem hinteren Kupplungsstangenabschnitt und dem Wagenkasten ist zumindest eine Energieverzehreinrichtung, beispielsweise in Gestalt eines Federapparates oder aber in Gestalt eines Verformungsrohres, welches nach Überschreiten einer kritischen in das Energieverzehrelement eingeleiteten Stoßkraft anspricht und durch plastische Verformung einen Teil der in das Energieverzehrelement eingeleiteten Stoßenergie abbaut, angeordnet und ausgelegt, um zumindest teilweise die in einem Crashfall oder im normalen Fahrbetrieb auftretende und von der Kupplungsstange auf den Wagenkasten übertragene Stoßenergie zu verzehren, d. h. in plastische Verformungsarbeit und Wärme umzuwandeln oder zu absorbieren. Die Auslegung erfolgt in Abhängigkeit der Größe der auftretenden Kräfte. Für einen sehr hohen Energieverzehr bedarf es einer entsprechenden Auslegung der Energieverzehrvorrichtungen, wobei sich diese in einem erhöhten Bauraumbedarf niederschlägt.

Bekannt sind ferner Zugbügelsysteme mit integrierter Vordämpfung und reversiblen Energieverzehr in Form von vorgespannten Federeinheiten, wie beispielsweise in US 6,681,943 B2 offenbart.

Aus der Druckschrift EP 1 468 889 B1 ist ein Schienenfahrzeug mit einer Kupplungsanlenkung und einem Gummidämpfer vorbekannt, der mit dem Korpus der Kupplung durch einen Verbindungsbolzen gekoppelt ist, und ein irreversibles energieabsorbierendes Element, das rohrförmig ist und über seine gesamte Länge einen rechteckigen Querschnitt aufweist, umfasst, wobei die Gummidämpferanordnung und das irreversible energieabsorbierende Element in Reihe in Längsrichtung eines Fahrzeugkörpers des Fahrzeugs angeordnet sind. Der Fahrzeugkörper-Rahmen ist dafür konfiguriert, eine Kollisionslast in Längsrichtung des Fahrzeugkörpers, die über das energieabsorbierende Element übertragen wird, aufzunehmen. Der Gummidämpfer wird dazu in einem Stützrahmen gehalten, der am Fahrzeugkörper-Rahmen angebracht ist.

Eine an einem Untergestell eines Schienenfahrzeuges angeflanscht befestigte Zug- und Stoßeinrichtung mit in einem einzigen Gehäuse angeordneten zug- und druckseitigen Energieverzehreinrichtungen ist aus DE 20 2005 004 502 U1 vorbekannt. Druckseitiges und zugseitiges Energieverzehrsystem in einem Gehäuse in Reihe geschaltet, wobei eines der beiden ein Verformungselement umfasst.

WO 2016/026708 A1 offenbart eine Ausführung, bei welcher sowohl die Zugkräfte als auch Stoßkräfte durch die Energieverzehreinrichtungen mit reversiblem und irreversiblem Energieverzehr geleitet werden. Beide sind für maximale Belastungen in beiden Übertragungsrichtungen auszulegen.

Ausgehend von den beschriebenen Systemen stellt sich die Aufgabe, eine Zug- und Stoßeinrichtung der eingangs genannten Art, insbesondere für eine Kupplungsanlenkung über Zugbügel, wie für SA-3-Kupplungen oder AAR-Kupplungen üblich, dahingehend weiterzuentwickeln, dass zur Übertragung von Zug- und Druckkräften von der Kupplungsstange ein hoher Energieverzehr im zur Verfügung stehenden Bauraum ohne erhebliche Zusatzmodifikationen einbaubar ist. Die erfindungsgemäße Lösung soll sich dabei durch einen relativ einfachen Aufbau auszeichnen.

Die erfindungsgemäße Lösung ist durch die Merkmale des Anspruches 1 und 18 charakterisiert. Vorteilhafte Ausbildungen sind in den Unteransprüchen wiedergegeben.

Eine erfindungsgemäß ausgebildete Zug- und Stoßeinrichtung für ein spurgeführtes Fahrzeug, insbesondere Schienenfahrzeug, mit einer mit einem Wagenkasten eines Fahrzeuges über einen Zugbügel koppelbaren Kupplungsstange umfasst eine zwischen dem wagenkastenseitigen Endbereich der Kupplungsstange und dem Wagenkasten anordenbaren Energieverzehrvorrichtung. Die Energieverzehrvorrichtung ist derart ausgelegt, dass der Kraftfluss der von der Kupplungsstange auf diese übertragenen Druck- bzw. Stoßkräfte und über den Zugbügel übertragenen Zugkräfte zumindest teilweise durch diese geleitet wird und über Anschlagbereiche für die Einleitung von Zugkräften und/oder Druckkräften am Wagenkasten oder einem mit diesem wenigstens mittelbar verbundenen Bauteil auf den Wagenkasten übertragen wird. Die Erfindung ist dadurch gekennzeichnet, dass die Energieverzehrvorrichtung eine reversible Energieverzehreinrichtung und eine Energieverzehreinrichtung mit irreversiblem Energieverzehr umfasst, wobei
die Energieverzehrvorrichtung derart ausgelegt ist, dass der Kraftfluss der von der Kupplungsstange auf diese übertragenen Zugkräfte nur durch die reversible Energieverzehreinrichtung geleitet wird und
der Kraftfluss der von der Kupplungsstange auf diese übertragenen Druckkräfte durch die reversible Energieverzehreinrichtung und die Energieverzehreinrichtung mit irreversiblen Energieverzehr geleitet wird, wobei die Energieverzehreinrichtung mit irreversiblem Energieverzehr in Stoßkraft-Flussrichtung in Reihe zu reversiblen Energieverzehreinrichtung angeordnet ist.

Eine Zug- und Stoßeinrichtung für ein spurgeführtes Fahrzeug, insbesondere Schienenfahrzeug, mit einer mit einem Wagenkasten eines Fahrzeuges über einen Zugbügel gekoppelten Kupplungsstange umfasst eine zwischen dem wagenkastenseitigen Endbereich der Kupplungsstange und dem Wagenkasten angeordnete Energieverzehrvorrichtung mit einer reversiblen Energieverzehreinrichtung und einer Energieverzehreinrichtung mit irreversiblem Energieverzehr. Die Energieverzehrvorrichtung ist derart ausgelegt, dass der Kraftfluss der von der Kupplungsstange auf diese übertragenen Druck- bzw. Stoßkräfte und/oder über den Zugbügel übertragenen Zugkräfte durch diese geleitet wird und über Anschlagbereiche für die Einleitung von Zugkräften und/oder Druckkräften am Wagenkasten oder einem mit diesem wenigstens mittelbar verbundenen Bauteil auf den Wagenkasten übertragen werden. Dabei ist die Energieverzehreinrichtung mit irreversiblem Energieverzehr für die Aufnahme von Druckkräften in Reihe zur reversiblen Energieverzehreinrichtung geschaltet und verformt sich bei Überschreitung einer vordefinierten maximalen Zug-/Stoßkraft irreversibel oder wird zerstört. Erfindungsgemäß ist vorgesehen, dass die Energieverzehrvorrichtung zwischen Kupplungsstange und Wagenkasten innerhalb des Standardeinbauraumes gemäß UIC-Norm 530 angeordnet ist. Iinsbesondere erfolgt die Anordnung in Längsrichtung betrachtet zwischen den Anschlagbereichen (13, 14) für die wenigstens mittelbare Einleitung von Zugkräften und/oder Druckkräften am Wagenkasten oder einem mit dem Wagenkasten wenigstens mittelbar verbundenen Bauteil.

Die erfindungsgemäße Lösung vereint damit die Vorteile reversiblen und irreversiblen Energieverzehrs auf minimalem Bauraum für eine Zug- und Stoßeinrichtung unter Beibehaltung bestehender Einbauverhältnisse und erlaubt eine einfache Nachrüstung in bereits bestehende Systeme.

Insbesondere die Führung des Kraftflusses und Einleitung in den Wagenkasten bei Zugbelastung nur über die reversible Energieverzehreinrichtung und die Führung des Kraftflusses bei Stoßbelastung über die reversible und irreversible Energieverzehreinrichtung bietet den Vorteil, die reversible Energieverzehreinrichtung lediglich für maximale Zugbelastung auslegen zu müssen. Diese kann dadurch kleiner ausgeführt werden und der dadurch gewonnene Bauraum für die Energieverzehreinrichtung mit irreversiblem Energieverzehr genutzt werden.

In einer vorteilhaften Ausführen sind die reversible Energieverzehreinrichtung und die Energieverzehreinrichtung mit irreversiblem Energieverzehr koaxial zueinander angeordnet. Die Anordnung kann in Längsrichtung betrachtet hintereinander oder aber zumindest teilweise überlappend erfolgen. Im zweiten Fall ist die reversible Energieverzehreinrichtung oder ein diese aufnehmendes Bauteil wenigstens über einen Teil von deren/dessen Erstreckung in Längsrichtung der Zug- und Stoßeinrichtung betrachtet an/in der Energieverzehreinrichtung mit irreversiblem Energieverzehr geführt. Über die Führung wird eine Ausrichtung der Energieverzehreinrichtungen zueinander gewährleistet und auch die Stabilität der Zug- und Stoßeinrichtung insgesamt erhöht.

In einer Weiterentwicklung ist zwischen der reversiblen Energieverzehreinrichtung und der Energieverzehreinrichtung mit irreversiblem Energieverzehr eine Abschereinrichtung vorgesehen, die derart ausgelegt und angeordnet ist, bei Überschreitung einer maximal zulässigen Zug-/Stoßkraft anzusprechen und eine destruktive Einwirkung auf die Energieverzehreinrichtung mit irreversiblem Energieverzehr zuzulassen. Diese Lösung bietet den Vorteil einer definierten Festlegung der erforderlichen Abscherkraft.

Um genügend große Abstützflächen zur gegenseitigen Abstützung an den beiden Energieverzehreinrichtungen bereitzustellen und diese auf einfache Art und Weise miteinander in Wirkverbindung zu bringen, ist zwischen der reversiblen Energieverzehreinrichtung und der Energieverzehreinrichtung mit irreversiblem Energieverzehr eine Zwischeneinheit angeordnet, welche eine Abstützfläche für die reversible Energieverzehreinrichtung und eine Abstützfläche für die Energieverzehreinrichtung mit irreversiblem Energieverzehr bildet, wobei die Zwischeneinheit und die Energieverzehreinrichtung mit irreversiblem Energieverzehr bis zum Erreichen einer maximal zulässigen Zug-/Stoßkraft als Stützeinheit für die reversible Energieverzehreinrichtung fungieren und bei Überschreitung der maximal zulässigen Zug-/Stoßkraft die Abschereinrichtung betätigt und/oder destruktiv auf die Energieverzehreinrichtung mit irreversiblem Energieverzehr einwirkt. Über die Zwischeneinheit können somit unterschiedlich große Abstützbereiche und ein Versatz zwischen diesen aufeinander abgestimmt werden. Insbesondere können hinsichtlich der Größe unterschiedlich ausgelegte Energieverzehreinrichtungen miteinander kombiniert werden. Ferner können auf diese Art und Weise hinsichtlich der Dimensionierung im Kraftübertragungsbereich gleiche reversible Energieverzehreinrichtungen mit im Krafteinleitungsbereich unterschiedlich dimensionierten Energieverzehreinrichtungen mit irreversiblem Energieverzehr und umgekehrt allein über die Gestaltung der Zwischeneinheit kombiniert werden. Dies bietet den Vorteil, für unterschiedliche Lastfälle Bauteile mit einen hohem Standardisierungsgrad einsetzen zu können.

In einer vorteilhaften Ausbildung weist die Zwischeneinheit an ihrer zur Energieverzehreinrichtung mit irreversiblem Energieverzehr gerichteten Stirnseite einen Flächenbereich auf, der derart ausgebildet ist, geeignet zu sein, mit der Abschereinrichtung und/oder der reversiblen Energieverzehreinrichtung zusammenzuwirken und mit zumindest einem Flächenbereich an der Energieverzehreinrichtung mit irreversiblem Energieverzehr zusammenzuwirken. In einer bevorzugten Ausbildung weist die Zwischeneinheit dazu ein eine Kegelfläche aufweisendes Zwischenelement zum Zusammenwirken mit der Energieverzehreinrichtung mit irreversiblem Energieverzehr auf. Die Kegelfläche bietet den Vorteil großer Flächenbereiche und der Einleitung von Scherkräften.

Um eine einfache Montage und Handhabung der reversiblen Energieverzehreinrichtung sowie große Flächen zur Kraftübertragung gewährleisten zu können, ist vorgesehen, dass die Energieverzehrvorrichtung in Einbaulage in Längsrichtung der Kupplungsstange betrachtet ein fahrzeugseitig vorderes Übertragungselement und ein fahrzeug- bzw. wagenkastenseitig hinteres Übertragungselement aufweist, zwischen denen die reversible Energieverzehreinrichtung vorgespannt angeordnet ist. Die Vorspannung wird im einfachsten Fall über einen auf der Längsachse und damit mittig angeordneten Zuganker oder eine Vielzahl von die Energieverzehreinrichtung entweder durchsetzenden oder um den Außenumfang dieser angeordneten und die Übertragungselemente verbindenden Zuganker gewährleistet. Die reversible Energieverzehreinrichtung kann auf diese Art und Weise mit den Übertragungselementen als vormontierte Einheit bereitgestellt werden.

Vorzugsweise ist die reversible Energieverzehreinrichtung in einem Gehäuse angeordnet, wobei das Gehäuse vorzugsweise mehrteilig ausgebildet ist. Dadurch kann eine gegenüber Umwelteinflüssen in der Einbausituation gekapselte Ausführung bereitgestellt werden, die als eigenständig handhabbare vormontierte Einheit vorliegt und in dieser Form montierbar ist. In einer besonders vorteilhaften Ausbildung wird das Gehäuse vom Zugbügel gebildet. In diesem Fall ist die reversible Energieverzehreinrichtung innerhalb des Gehäuses des Zugbügels vorgespannt angeordnet. Insbesondere im Zusammenhang mit der vorbeschriebenen Ausführung als mit den Übertragungselementen vormontierte Einheit kann diese auf einfache Art und Weise in den Zugbügel integriert werden.

Die erfindungsgemäße Zug-/Stoßeinrichtung wiederum kann als bauliche Einheit komplett vormontiert in den Zwischenraum zwischen Kupplungsstange und Wagenkasten bzw. dem mit diesem verbunden und die Zug- und Druckanschläge aufweisenden Bauteil eingebracht werden.

Bezüglich der konkreten Ausgestaltung der einzelnen Energieverzehreinrichtungen besteht eine Mehrzahl von Möglichkeiten.

Die reversible Energieverzehreinrichtung weist zumindest ein oder eine Mehrzahl reversibler Energieverzehrglieder auf, die hinsichtlich der Führung des Kraftflusses in Reihe oder parallel geschaltet sein können. In einer besonders vorteilhaften Ausgestaltung ist das einzelne Energieverzehrglied vorzugsweise als Polymerfeder ausgebildet. Die Ausbildung als Polymerfeder erlaubt zum einen unterschiedliche Federgeometrien. Vorzugsweise wird eine zentralsymmetrische Ausbildung der Federelemente gewählt. Im Hinblick auf deren Abstützung am kupplungsstangenseitigen Übertragungselement und dem Zwischenelement oder direkt der Energieverzehreinrichtung mit reversiblem Energieverzehr kann jedoch zumindest in den stirnseitigen Endbereichen eine von der zentralsymmetrischen Ausführung abweichende Geometrie, insbesondere eine von einer Kreisform verschiedene Querschnittsformgebung gegeben sein. Denkbar sind elliptische, ovale, ellipsenähnliche oder andere Querschnittsgeometrien. Mit einem Energieverzehrglied, wie beispielsweise mit einem Federelement, das eine derartige von einer Kreisform verschiedene Querschnittsformgebung aufweist, kann in wirkungsvoller Weise ein Verdrehen des Energieverzehrgliedes relativ zum Übertragungselement oder Zwischenelement verhindert werden, wenn das Energieverzehrglied bündig anliegt. In einer besonders vorteilhaften Ausbildung ist das Zwischenelement zumindest an einer Stirnseite als Kegel ausgebildet. Dies erlaubt im Zusammenwirken mit einem destruktiven Energieverzehrelement in Form eines Verformungsrohres eine optimierte Krafteinleitung.

In einer vorteilhaften Ausbildung umfasst die Energieverzehreinrichtung mit irreversiblem Energieverzehr zumindest ein destruktives Verformungselement. Bezüglich der Anordnung und Ausbildung dessen besteht eine Mehrzahl von Möglichkeiten. Vorzugsweise ist das einzelne destruktive Verformungselement als ein Element aus der nachfolgenden Gruppe von Elementen ausgebildet: ein Verformungskörper, ein Verformungsrohr oder eine Wabenstruktur. Bei einem Verformungskörper handelt es sich dabei um ein dreidimensionales Gebilde beliebiger Kontur. Dies bietet den Vorteil, das destruktiv verformbare Element an beliebige Anschlussgeometrien und Einbausituationen sowie den Lastfall anpassen zu können.

Bei Ausbildung als Verformungsrohr ist dieses zumindest auf einem Teilbereich seiner axialen Erstreckung als Hohlprofilelement ausgebildet, wobei der Querschnitt des Hohlprofiles als Rohr, Kastenprofil oder Vieleck ausgeführt ist. Die Ausbildung als Rohr bietet im Zusammenhang mit der Ausbildung der reversiblen Energieverzehreinrichtung als Federeinheit den Vorteil, beide koaxial zueinander ausgerichtet in einem Gehäuse anzuordnen. Die Ansprechkraft und das gewünschte Verformungsverhalten kann dabei als Funktion der Geometrie der Querschnittsfläche, Wandstärke, Erstreckung in Längsrichtung (Länge) sowie des verwendeten Materials eingestellt werden.

Die Anschlagbereiche für die Einleitung von Zugkräften und/oder Druckkräften am Wagenkasten sind vorzugsweise an einer mit dem Wagenkasten verbindbaren Führung angeordnet, wobei die Führung vorzugsweise von einem Profilelement gebildet ist.

Die erfindungsgemäße Lösung ist nachfolgend anhand von Figuren erläutert. Darin ist im Einzelnen folgendes dargestellt:
- Figur 1a: zeigt eine Kupplungsanordnung gemäß dem Stand der Technik;
- Figuren 2a und 2b: zeigen anhand eines Ausschnittes aus einer Kupplungsanordnung eine erfindungsgemäß ausgebildete ZugStoßeinrichtung in zwei Ansichten,
- Figur 3: zeigt die Energieverzehrvorrichtung im Axialschnitt.

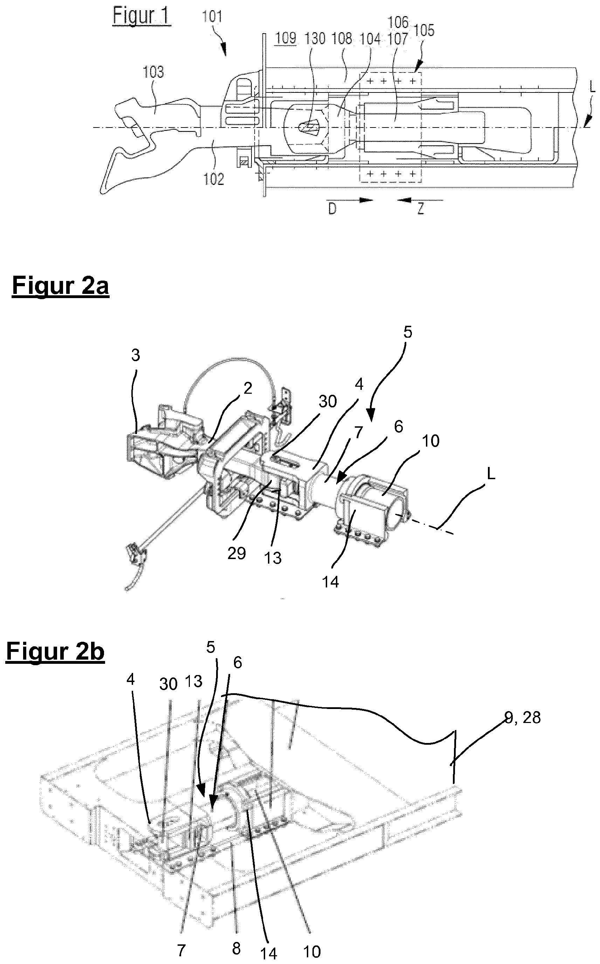

Die Figur 1 zeigt beispielhaft eine Ausbildung einer aus dem Stand der Technik bekannten Zugkupplung, insbesondere Mittelpufferkupplung 101. Die theoretische Längsachse L der Mittelpufferkupplung 101 fällt in Einbaulage mit der Längsrichtung des Fahrzeuges zusammen. Die Richtungen der während des Betriebes auftretenden Zug- und Druckbelastungen auf die Kupplungsstange 102 sind für die Zugrichtung mit Z und die Druckrichtung mit D bezeichnet.

Bei der dargestellten Mittelpufferkupplung 101 handelt es sich beispielhaft um eine Kupplung vom Typ SA-3, bei welcher eine Kupplungsstange 102 über einen Keil 130 mit einem mit dem Untergestell 109 eines Wagenkastens verbundenen Zugbügel 104 verbunden ist. Auf der vom Wagenkasten abgewandten Seite ist die Kupplungsstange 102 mit einem Kupplungskopf 103 entweder direkt oder bei unterteilter Kupplungsstange 102 über weitere Zwischenelemente gekoppelt. Zwischen der Kupplungsstange 102, insbesondere dem zum Wagenkasten gerichteten Endbereich der Kupplungsstange 102 und dem Wagenkasten ist eine Zug- und Stoßeinrichtung 105 angeordnet, welche eine Energieverzehrvorrichtung 106 umfasst. Diese weist im dargestellten Fall wenigstens eine Energieverzehreinrichtung 107, umfassend ein reversibles Energieverzehrelement in Form eines Federapparates auf. Eine andere, hier nicht dargestellte Ausführung ist durch den Einsatz einer Energieverzehreinrichtung, umfassend zumindest ein destruktives Energieverzehrelement in Form eines Verformungsrohres charakterisiert. Die Anordnung der jeweiligen Energieverzehreinrichtung 107 erfolgt dabei innerhalb der Erstreckung des Zugbügels 104 zwischen Kupplungsstange 102 und Abstützung dieser an dafür vorgesehenen und in Zug- oder Druckrichtung wirksamen Anschlagflächenbereichen am Untergestell 109 des Wagenkastens.

Die Figuren 2a und 2b verdeutlichen in unterschiedlichen Ansichten und unterschiedlichen Ausschnitten aus einer Kupplungsanordnung die Anordnung und den Aufbau einer erfindungsgemäßen Zug- und Stoßeinrichtung 5, welche zwischen einem zum Wagenkasten weisenden Endbereich 29 der Kupplungsstange 2 und dem Wagenkasten angeordnet ist. Im Einzelnen ist die Zug- und Stoßeinrichtung 5 zwischen dem mit der Kupplungsstange 2 gekoppelten Zugbügel 4 und dem Wagenkasten bzw. einem mit diesem direkt oder über Zwischenelemente verbundenen Bauteil angeordnet.

Die Figur 2a zeigt beispielhaft in einer Perspektivansicht eine Mittelpufferkupplung 1 vom Typ SA-3 mit einem Kupplungskopf 3 und eine mit diesem Kupplungskopf 3 verbundene oder integral ausgeführte Kupplungsstange 2, welche über einen Zugbügel 4 mit dem hier nicht dargestellten Wagenkasten eines Schienenfahrzeuges gekoppelt ist. Die Kopplung erfolgt lösbar über einen Keil oder Bolzen 30, der den wagenkastenseitigen Endbereich 28 der Kupplungsstange 2 mit dem Zugbügel 4 verbindet. Der Zugbügel 4 weist dazu an seinem zur Kupplungsstange 2 gerichteten Endbereich einen die Kupplungsstange gabelförmig aufnehmenden Bereich auf, welcher ein sich in Kupplungslängsrichtung erstreckendes Langloch zur Aufnahme des Bolzens 30 aufweist.

Die Figur 2b verdeutlicht die Anordnung der erfindungsgemäßen Zug- und Stoßeinrichtung 5 an einer Führung bzw. einem mit einem hier nur angedeuteten Untergestell 9 verbundenen Längsträger 8. Dargestellt ist der Zugbügel 4 und die eine Energieverzehrvorrichtung 6 umfassende Zug- und Stoßeinrichtung 5. Nicht dargestellt ist die mit dem Zugbügel 4 verbundene Kupplungsstange 2. Die Längsrichtung der Kupplungsanordnung fällt dabei in der neutralen Einbaulage (ohne Auslenkung) mit der Längsrichtung der Kupplung bzw. des schienengebundenen Fahrzeuges zusammen.

Die in den Figuren 2a und 2b wiedergegebene Zug- und Stoßeinrichtung 5 umfasst erfindungsgemäß eine Energieverzehrvorrichtung 6, die derart ausgelegt ist, dass der Kraftfluss der von der Kupplungsstange 2 auf diese übertragenen Druck- bzw. Stoßkräfte und die über den Zugbügel übertragenen Zugkräfte zumindest teilweise durch diese geleitet und über Anschlagbereiche 13, 14 für die Einleitung von Zugkräften und/oder Druckkräften am Wagenkasten oder einem mit diesem wenigstens mittelbar verbundenen Bauteil auf den Wagenkasten übertragen werden. Die dafür vorgesehenen Anschlagbereiche 13 und 14 sind hier an Bauteilen ausgebildet, die an einem, mit dem Untergestell 9 gekoppelten Längsträger 8 - wie in Figur 2b wiedergegeben - befestigbar sind. Denkbar ist auch die integrale Ausbildung der Anschlagbereiche 13, 14 am Längsträger 8 selbst oder einem anderen mit dem Untergestell 9 verbundenen Bauteil. Der Anschlagbereich 13 fungiert dabei als Zuganschlag, der Anschlagbereich 14 als Druckanschlag.

Die Energieverzehrvorrichtung 6 umfasst erfindungsgemäß eine reversible Energieverzehreinrichtung 7 und eine Energieverzehreinrichtung 10 mit irreversiblen Energieverzehr, wobei die Energieverzehrvorrichtung 6 derart ausgelegt ist, dass der Kraftfluss der von der Kupplungsstange auf diese übertragenen Zugkräfte nur durch die reversible Energieverzehreinrichtung 7 geleitet wird. Der Kraftfluss der von der Kupplungsstange 2 auf diese übertragenen Druckkräfte wird durch die reversible Energieverzehreinrichtung 7, die Energieverzehreinrichtung 10 mit irreversiblen Energieverzehr und in den Wagenkasten bzw. ein mit diesem verbundenes Bauteil eingeleitet. Die Energieverzehreinrichtung 10 mit reversiblem Energieverzehr ist dazu in Stoßkraft-Flussrichtung in Reihe zur reversiblen Energieverzehreinrichtung 7 angeordnet. Bei Überschreitung einer vordefinierten maximalen Stoßkraft wird die Energieverzehreinrichtung 10 mit irreversiblem Energieverzehr zum Zweck der Energieabsorption irreversibel verformt und/oder zerstört.

Figuren 2a und 2b zeigen nur die wesentlichen Bestandteile der erfindungsgemäß ausgeführten Zug- und Stoßeinrichtung 5 in Perspektivansichten unterschiedlicher Ausschnitt-Darstellungen der Kupplungsanordnung. Reversible und irreversible Energieverzehreinrichtung 7 und 10 sind in Reihe und in Längsrichtung der Zug-/Stoßeinrichtung 5 betrachtet hintereinander angeordnet. Die Anordnung erfolgt zumindest teilweise innerhalb der Erstreckung des Zugbügels in Längsrichtung, insbesondere innerhalb des Standardeinbauraumes gemäß UIC-Norm 530 bzw. des Kupplungseinbauraumes.

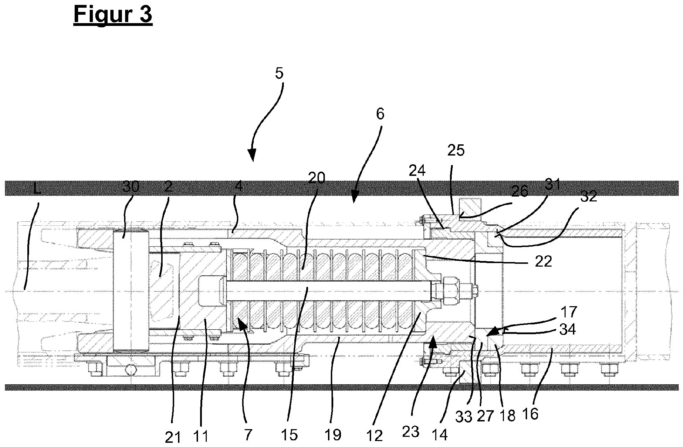

Nachfolgende Ausführungen zur Figur 3 beziehen sich auch auf die Zug- und Stoßeinrichtungen 5 in den Figuren 2a und 2b.

Die Figur 3 zeigt in einem Schnitt durch die Längsachse der Kupplungsstange 2 die Zug- und Stoßeinrichtung 5 in einer Ansicht auf eine Schnittebene, die durch die Längsachse L und eine Senkrechte zu dieser beschreibbar ist.

Die Energieverzehreinrichtungen 7 und 10 sind koaxial zueinander angeordnet und in Richtung der Längsachse L der Kupplung betrachtet hintereinander bzw. einander nebengeordnet angeordnet. Die reversible Energieverzehreinrichtung 7 umfasst ein oder mehrere Energieverzehrelemente, die funktional betrachtet in Reihe oder parallel zueinander geschaltet bzw. wirksam sind. Vorzugsweise umfasst die reversible Energieverzehreinheit 7 eine Federeinheit 20 in Form einer Polymerfeder. Andere Ausführungen sind denkbar.

Desweiteren ist die reversible Energieverzehreinrichtung 7 vorzugsweise zumindest teilweise an oder in der irreversiblen Energieverzehreinrichtung 10 geführt. D.h. die Energieverzehreinrichtung 10 mit irreversiblem Energieverzehr bildet eine Führung für die reversible Energieverzehreinrichtung 7. Im dargestellten Fall wird dies in vorteilhafter Weise dadurch erzielt, dass die reversible Energieverzehreinrichtung 7 in Längsrichtung betrachtet von einem Gehäuse 19 umschlossen ist. Das Gehäuse 19 umschließt einen Teilbereich der Energieverzehreinrichtung 7, insbesondere der Federeinrichtung in Längsrichtung betrachtet in Umfangsrichtung unter Ausbildung eines Abstandes, der einen Hohlraum beschreibt und bei Verformung der Federeinrichtung zumindest teilweise ausgefüllt wird. Das Gehäuse 19 ist mit einem Teilbereich seines Außenumfanges in seinem zum Wagenkasten gerichteten Endbereich 23 von der Energieverzehreinrichtung 10 mit irreversiblem Energieverzehr aufgenommen, insbesondere an dieser geführt. Die irreversible Energieverzehreinrichtung 10 umfasst im dargestellten Fall ein irreversibles Verformungselement in Form eines Verformungsrohres 16. Darunter ist ein Element zu verstehen, welches bei Beaufschlagung mit einer Kraft, die größer als die maximal zulässige Kraft ist, sich zumindest plastisch verformt. Das Verformungsrohr 16 ist vorzugsweise durch einen zylindrischen Querschnitt charakterisiert. Die Führung des Gehäuses der Energieverzehreinrichtung 7 an der Energieverzehreinrichtung 10 erfolgt dabei direkt oder vorzugsweise über ein Zwischenelement 27 in Form einer radial zwischen Gehäuse 19 und Verformungsrohr 16 angeordneten Schraubring 24.

Das Gehäuse 19 kann von einem separaten Gehäuse gebildet werden, welches mit dem Zugbügel 4 zu einer baulichen Einheit zusammengefasst, insbesondere verbunden ist. In besonders vorteilhafter Ausbildung wird das Gehäuse 19 in Funktionskonzentration vom Zugbügel 4 gebildet. Der Zugbügel 4 ist in Figur 3 dazu zumindest in dem die Energieverzehreinrichtung 7 aufnehmenden Bereich teilweise von einem Profilelement gebildet, welches die Energieverzehrelemente der Energieverzehreinrichtung 7 in Umfangsrichtung um die Kupplungslängsachse L in Einbaulage betrachtet zumindest teilweise, vorzugsweise vollständig umschließt.

Die Führung der Energieverzehreinrichtung 7 erfolgt im dargestellten Fall mit einem Endbereich am Innenumfang des Verformungsrohres 16. Es versteht sich, dass auch eine Führung eines Innenumfang bildenden Bereiches des Gehäuses 19 an einem Flächenbereich am Außenumfang des Verformungsrohres 16 möglich ist.

Die Abstützung der in die Energieverzehrvorrichtung 6 der Zug- und Stoßeinrichtung 5 eingeleiteten Stoßkräfte erfolgt an einem Druckanschlag, d.h. dem Anschlagbereich 14. Die Abstützung erfolgt in der dargestellten Ausführung direkt über das Verformungsrohr 16. Das Verformungsrohr 16 weist dazu an einem Außenumfangsbereich eine Abstützfläche 26 auf, die derart angeordnet und ausgebildet ist, mit dem Anschlagbereich 14 zusammenzuwirken. Diese Abstützfläche 26 ist im dargestellten Fall von einem Bereich vergrößerten Durchmessers am Verformungsrohr 16 gebildet. Dieser Bereich wird im dargestellten Fall vom kupplungsstangenseitigen Endbereich 25 des Verformungsrohres 16 gebildet. Andere Ausführungen sind denkbar.

Die in die Energieverzehreinrichtung 7 eingeleitete Stoßkraft wird von der reversiblen Energieverzehreinheit 7 über eine Zwischeneinheit 17 auf den Anschlagbereich 14 übertragen. Dazu weist die Zwischeneinheit 17 an der zur Kupplungsstange gerichteten Stirnseite 33 einen Flächenbereich auf, der als Abstützbereich für die reversible Energieverzehreinrichtung 7 dient. Die der kupplungsstangenseitigen Stirnseite 33 gegenüberliegenden Stirnseite 34 steht wenigstens mittelbar mit dem Verformungsrohr 16 in Wirkverbindung. Das Verformungsrohr 16, insbesondere ein Innenumfangsbereich des Verformungsrohres 16 weist vorzugsweise Anschlagflächen zum Zusammenwirken mit der Zwischeneinheit 17 auf, die in Längsrichtung des Energieverzehrelementes betrachtet geneigt ausgebildet ist. Vorzugsweise sind die beiden miteinander in Wirkverbindung stehenden bzw. aneinander anliegenden Flächenbereiche, insbesondere von Zwischeneinheit 17 und Verformungsrohr 16 geneigt in Längsrichtung ausgebildet, bei Ausbildung mit kreis- oder ringförmigen Querschnitt als Kegelflächen. Die Funktion kann von einem Bauteil oder aber unterschiedlichen Bauteilen realisiert werden. Vorzugweise wird eine mehrteilige Ausführung der Zwischeneinheit 17 gewählt. Diese erlaubt eine Funktionstrennung und einfache Anpassung an unterschiedliche Innengeometrien des Verformungsrohres. Im dargestellten Fall umfasst die Zwischeneinheit 17 ein Zwischenelement 27 in Form einer Ringscheibe und ein sich an dieser abstützenden Kegelring 18. Der Kegelring 18 bildet eine Kegelfläche als Abstützfläche 31 zur Anlage an einem Flächenbereich am Verformungsrohr 16, insbesondere einer Abstützfläche 32 an einem Innenumfangsbereich.

In besonders vorteilhafter Weise wird die Abstützfläche am Verformungsrohr 16 von einem an diesem ausgebildeten oder mit diesem verbundenen Vorsprung gebildet. Die einteilige Ausbildung bietet den Vorteil einer einfachen Fertigung. Eine gleichmäßige Lasteinleitung wird dadurch gewährleistet, dass die einzelne Anschlagfläche in Umfangsrichtung des Energieverzehrelementes betrachtet geschlossen ausgeführt ist. Im Überlastfall wird durch diese Ausbildung ein Abscheren des Vorsprunges und/oder Aufweiten des Verformungsrohres 16 gewährleistet.

Die Anordnung der reversiblen Energieverzehreinrichtung 7, insbesondere der Federeinheit 20 erfolgt hier zwischen zwei Übertragungselementen 11 und 12 - einem in Längsrichtung der Kupplungslängsachse L kupplungsstangenseitig angeordneten Übertragungselement 11, insbesondere einer ersten Anschlagplatte, und einem wagenkastenseitig angeordneten Übertragungselement 12, insbesondere zweiten Anschlagplatte, die im dargestellten Fall über wenigstens einen, vorzugsweise mehrere Zuganker 15 miteinander und unter Vorspannung der reversiblen Energieverzehreinrichtung 7 verbunden sind. Der einzelne Zuganker 15 erstreckt sich dabei vorzugsweise durch die Energieverzehreinrichtung 7, insbesondere Federeinheit 20. Der Zuganker 15 dient vorzugsweise gleichzeitig als Führung für die Federeinheit 20. Die Querschnittsgeometrie des Zugankers 15 ist beliebig wählbar. Vorzugsweise werden kreisförmige Querschnittsgeometrien oder mit geringer Abweichung von der Kreisform gewählt.

Das Übertragungselement 11 weist an der vom Übertragungselement 12 weg gerichteten Stirnseite einen Abstützbereich 21, insbesondere in Form von Abstützflächen bzw. Flächenbereichen auf, die mit entsprechenden Anschlagbereichen, insbesondere Anschlag 13 am Wagenkasten, insbesondere Untergestell 9 in Wirkverbindung bringbar sind. Das Übertragungselement 12 stützt sich unter Stoßkrafteinwirkung über das Gehäuse 19 und die Zwischeneinheit 17 am Anschlagbereich 14, insbesondere Druckanschlag ab.

Die Übertragungselemente 11, 12 sind vorzugsweise scheibenförmig oder plattenförmig ausgebildet, können jedoch auch in Funktionskonzentration als Gehäusebestandteile ausgebildet sein, die vorzugsweise zumindest einen Teilbereich einer der Energieverzehreinrichtungen 7 oder 10 in Umfangsrichtung zumindest teilweise umschließend ausgeführt sind.

Die Anschlagbereiche 13 und 14 können dabei direkt am Untergestell 9 oder aber vorzugsweise in einer an diesem angeordneten Längsträger 8 ausgebildet sein, wobei der Längsträger 8 vorzugsweise mit dem Untergestell 9 am Wagenkasten verbunden ist. Die Anschlagbereiche 13 und 14 am Längsträger 8 für den Zugbügel 4 fungieren dabei als Zug- oder Druckanschlag. Der im dargestellten Fall in Längsrichtung L kupplungsstangenseitig angeordnete Anschlagbereich 13 fungiert als Zuganschlag, während der Anschlagbereich 14 als Druckanschlag fungiert. Die Anschlagbereiche 13 und 14 weisen jeweils mit der Energieverzehrvorrichtung 6, insbesondere den Übertragungselementen 11 und 12 wenigstens mittelbar zusammenwirkende Abstützbereiche, insbesondere Abstützflächenbereiche auf.

Die Zug- und Stoßeinrichtung 5 ist derart ausgebildet, dass der Kraftfluss der von der Kupplungsstange 2 übertragenen Druckkräfte vom kupplungsstangenseitigen und in Längsrichtung L vorderen Übertragungselement 11 über die Energieverzehreinrichtung 7 auf die dem ersten Übertragungselement 11 gegenüberliegende Stirnfläche des zweiten Übertragungselementes 12 auf das Gehäuse 19 übertragen wird und von diesem über die Zwischeneinheit 17 auf das Verformungsrohr 16, welches sich am als Druckanschlag fungierenden Anschlagbereich 14 abstützt. Der Kraftfluss der von der Kupplungsstange 2 und dem Zugbügel 4 übertragenen Zugkräfte erfolgt vom Zugbügel 4 über das wagenkastenseitig hintere Übertragungselement 12, die Energieverzehrvorrichtung 7, insbesondere die Federeinheit 20 auf die dem wagenkastenseitigen Übertragungselement 12 gegenüberliegende Stirnfläche am kupplungsstangenseitigen Übertragungselement 11 und von diesem auf den ersten Anschlagbereich 13 über das Zusammenwirken der Abstützbereiche 21 von erstem Übertragungselement 11 und Zuganschlag 13.

Der Zugbügel 4 ist mit dem fahrzeugseitig ausgerichteten Endbereich der Kupplungsstange 4, hier über einen senkrecht zur Längsachse L ausgerichteten Bolzen 30 verbunden, wobei die Verbindung mit oder frei von einer Relativbewegungsmöglichkeit zwischen Kupplungsstange 2 und Zugbügel 4 sein kann.

### Bezugszeichenliste

- 1: Mittelpufferkupplung
- 2: Kupplungsstange
- 3: Kupplungskopf
- 4: Zugbügel
- 5: Zug-/Stoßeinrichtung
- 6: Energieverzehrvorrichtung
- 7: reversible Energieverzehreinrichtung
- 8: Langsträger
- 9: Untergestell
- 10: irreversible Energieverzehreinrichtung
- 11: Kraftübertragungselement, als Abstützplatte für Zugkräfte und Druckkräfte
- 12: Federendplatte
- 13: Anschlag, insbesondere Zuganschlag
- 14: Anschlag, insbesondere Druckanschlag
- 15: Zuganker
- 16: Verformungsrohr
- 17: Zwischeneinheit
- 18: Kegelring
- 19: Gehäuse
- 20: Federeinheit
- 21: Abstützbereich, insbesondere Flächenbereich am zugseitigen Übertragungselement zur Anlage an Zuganschlag
- 22: Abstützbereich für Federeinheit
- 23: Endbereich Zugbügel
- 24: Schraubring
- 25: Endbereich Verformungsrohr
- 26: Abstützfläche, insbesondere Abstützflächenbereich am Verformungsrohr
- 27: Zwischenelement
- 28: Wagenkasten
- 29: wagenkastenseitiger Endbereich der Kupplungsstange
- 30: Bolzen
- 31: Abstützfläche am Verformungsrohr
- 32: Abstützfläche Kegelring
- 33: Stirnseite
- 34: Stirnseite
- 101: Mittelpufferkupplung (Stand der Technik)
- 102: Kupplungsstange (Stand der Technik)
- 103: Kupplungskopf (Stand der Technik)
- 104: Zugbügel (Stand der Technik)
- 105: Zug-/Stoßeinrichtung (Stand der Technik)
- 106: Energieverzehreinichtung (Stand der Technik)
- 107: reversible Energieverzehreinrichtung (Stand der Technik)
- 108: Langträger Untergestell (Stand der Technik)
- 109: Untergestell (Stand der Technik)
- 130: Keil (Stand der Technik)
- D: Druckrichtung
- Z: Zugrichtung
- L: Längsrichtung; Kupplungslängsrichtung

## Patentansprüche

1. Zug- und Stoßeinrichtung (5) für ein spurgeführtes Fahrzeug, insbesondere Schienenfahrzeug,
mit einer mit einem Wagenkasten eines Fahrzeuges über einen Zugbügel (4) koppelbaren Kupplungsstange (2) und einer zwischen dem wagenkastenseitigen Endbereich der Kupplungsstange (2) und dem Wagenkasten anordenbaren Energieverzehrvorrichtung (6), wobei die Energieverzehrvorrichtung (6) derart ausgelegt ist, dass der Kraftfluss der von der Kupplungsstange auf diese übertragenen Druck- bzw. Stoßkräfte und über den Zugbügel übertragenen Zugkräfte zumindest teilweise durch diese geleitet wird und über Anschlagbereiche (13, 14) für die Einleitung von Zugkräften und/oder Druckkräften am Wagenkasten oder einem mit diesem wenigstens mittelbar verbundenen Bauteil auf den Wagenkasten übertragen wird,
**dadurch gekennzeichnet, dass**
die Energieverzehrvorrichtung (6) eine reversible Energieverzehreinrichtung (7) und eine Energieverzehreinrichtung (10) mit irreversiblen Energieverzehr umfasst, wobei
die Energieverzehrvorrichtung (6) derart ausgelegt ist, dass der Kraftfluss der von der Kupplungsstange auf diese übertragenen Zugkräfte nur durch die reversible Energieverzehreinrichtung (7) geleitet wird und
der Kraftfluss der von der Kupplungsstange auf diese übertragenen Druckkräfte durch die reversible Energieverzehreinrichtung (7) und die Energieverzehreinrichtung (10) mit irreversiblem Energieverzehr geleitet wird, wobei die Energieverzehreinrichtung (10) mit irreversiblem Energieverzehr in Stoßkraft-Flussrichtung in Reihe zu reversiblen Energieverzehreinrichtung angeordnet ist.

2. Zug- und Stoßeinrichtung (5) nach Anspruch 1,
**dadurch gekennzeichnet,**
**dass** die Energieverzehreinrichtung (10) mit irreversiblem Energieverzehr bei Überschreitung einer vordefinierten maximalen Stoßkraft irreversibel verformt oder zerstört wird.

3. Zug- und Stoßeinrichtung (5) nach einem der Ansprüche 1 bis 2,
**dadurch gekennzeichnet,**
**dass** die reversible Energieverzehreinrichtung (7) und die Energieverzehreinrichtung (10) mit irreversiblem Energieverzehr koaxial zueinander angeordnet sind.

4. Zug- und Stoßeinrichtung (5) nach einem der vorhergehenden Ansprüche,
**dadurch gekennzeichnet,**
**dass** die reversible Energieverzehreinrichtung (7) oder ein dieseaufnehmendes Bauteil wenigstens über einen Teil von deren/dessen Erstreckung in Längsrichtung der Zug- und Stoßeinrichtung (5) betrachtet an/in der Energieverzehreinrichtung (10) mit irreversiblem Energieverzehr geführt ist.

5. Zug- und Stoßeinrichtung (5) nach einem der vorhergehenden Ansprüche,
**dadurch gekennzeichnet,**
**dass** zwischen der reversiblen Energieverzehreinrichtung (7) und der Energieverzehreinrichtung (10) mit irreversiblem Energieverzehr eine Abschereinrichtung (18) vorgesehen ist, die derart ausgelegt und angeordnet ist, um bei Überschreitung einer maximal zulässigen Stoßkraft anzusprechen und eine destruktiv auf die Energieverzehreinrichtung (10) mit irreversiblem Energieverzehr einzuwirken.

6. Zug- und Stoßeinrichtung (5) nach einem der vorhergehenden Ansprüche,
**dadurch gekennzeichnet,**
**dass** zwischen der reversiblen Energieverzehreinrichtung (7) und der Energieverzehreinrichtung (10) mit irreversiblem Energieverzehr eine Zwischeneinheit (17) angeordnet ist, welche eine Abstützfläche für die reversible Energieverzehreinrichtung (7) und eine Abstützfläche für die Energieverzehreinrichtung (10) mit irreversiblem Energieverzehr bildet, wobei die Zwischeneinheit (17) und die Energieverzehreinrichtung (10) mit irreversiblem Energieverzehr bis zum Erreichen einer maximal zulässigen Stoßkraft als Stützeinheit für die reversible Energieverzehreinrichtung (7) fungieren und bei Überschreitung der maximal zulässigen Stoßkraft die Abschereinrichtung (18) betätigt und/oder destruktiv auf die Energieverzehreinrichtung (10) mit irreversiblem Energieverzehr einwirkt.

7. Zug- und Stoßeinrichtung (5) nach Anspruch 6,
**dadurch gekennzeichnet,**
**dass** die Zwischeneinheit (17) ein eine Kegelfläche aufweisendes Zwischenelement zum Zusammenwirken mit der Energieverzehreinrichtung (10) mit irreversiblem Energieverzehr umfasst.

8. Zug- und Stoßeinrichtung (5) nach einem der vorhergehenden Ansprüche,
**dadurch gekennzeichnet,**
**dass** die Energieverzehrvorrichtung (6) in Einbaulage in Längsrichtung der Kupplungsstange (2) betrachtet ein fahrzeugseitig vorderes Übertragungselement (11) und ein fahrzeugseitig hinteres Übertragungselement (12) aufweist, zwischen denen die reversible Energieverzehreinrichtung (7) vorgespannt angeordnet ist.

9. Zug- und Stoßeinrichtung (5) nach einem der vorhergehenden Ansprüche,
**dadurch gekennzeichnet,**
**dass** die reversible Energieverzehreinrichtung (7) innerhalb des Gehäuses des Zugbügels vorgespannt angeordnet ist.

10. Zug- und Stoßeinrichtung (5) nach einem der vorhergehenden Ansprüche,
**dadurch gekennzeichnet,**
**dass** die reversible Energieverzehreinrichtung (7) zumindest ein oder eine Mehrzahl reversibler Energieverzehrglieder umfasst, die hinsichtlich der Führung des Kraftflusses in Reihe oder parallel geschaltet sind.

11. Zug- und Stoßeinrichtung (5) nach Anspruch 10,
**dadurch gekennzeichnet,**
**dass** die reversible Energieverzehrvorrichtung (7) zumindest eine Polymerfeder umfasst.

12. Zug- und Stoßeinrichtung (5) nach einem der vorhergehenden Ansprüche,
**dadurch gekennzeichnet,**
**dass** die Energieverzehreinrichtung (10) mit irreversiblem Energieverzehr eine Mehrzahl von destruktiven Verformungselementen umfasst, die hinsichtlich der Führung des Kraftflusses in Reihe oder parallel geschaltet sind.

13. Zug- und Stoßeinrichtung (5) nach einem der vorhergehenden Ansprüche,
**dadurch gekennzeichnet,**
**dass** die Energieverzehreinrichtung (10) mit irreversiblem Energieverzehr zumindest ein destruktives Verformungselement umfasst,
welches
als ein Element aus der nachfolgenden Gruppe von Elementen ausgebildet ist
- ein Verformungskörper
- ein Verformungsrohr (16) oder
- eine Wabenstruktur.

14. Zug- und Stoßeinrichtung (5) nach Anspruch 13,
**dadurch gekennzeichnet,**
**dass** das Verformungsrohr sich direkt an einem Anschlagbereich am Wagenkasten oder einem mit diesem verbundenen Bauteil abstützt.

15. Zug- und Stoßeinrichtung (5) nach Anspruch 13 oder 14,
**dadurch gekennzeichnet,**
**dass** das die reversible Energieverzehreinrichtung und/oder das die reversible Energieverzehreinrichtung aufnehmende Gehäuse in Längsrichtung betrachtet zumindest teilweise innerhalb des Erstreckungsbereiches des Verformungsrohres in diesem geführt ist.

16. Zug- und Stoßeinrichtung (5) nach einem der Ansprüche 14 bis 15,
**dadurch gekennzeichnet,**
**dass** das Verformungsrohr (16) zumindest auf einem Teilbereich seiner axialen Erstreckung als Hohlprofilelement ausgebildet ist, wobei der Querschnitt des Hohlprofiles gewählt aus der nachfolgenden Gruppe von Profilen ausgebildet ist:
- Rohr
- Kasten
- Vieleck.

17. Zug- und Stoßeinrichtung (5) nach einem der vorhergehenden Ansprüche,
**dadurch gekennzeichnet,**
**dass** die Anschläge bzw. Anschlagbereiche für die Einleitung von Zugkräften und/oder Druckkräften am Wagenkasten an einer mit dem Wagenkasten verbindbaren Führung (8) angeordnet sind, wobei die Führung vorzugsweise von einem Profilelement gebildet ist.

18. Spurgebundenes Fahrzeug, insbesondere Schienenfahrzeug mit einer Zug- und Stoßeinrichtung (5) mit einer mit einem Wagenkasten eines Fahrzeuges über einen Zugbügel (4) gekoppelten Kupplungsstange (2) und einer zwischen dem wagenkastenseitigen Endbereich der Kupplungsstange (2) und dem Wagenkasten angeordneten Energieverzehrvorrichtung (6) gemäß einem der Ansprüche 1 bis 17.

## Claims

1. Pulling and buffering means (5) for a track-guided vehicle, in particular a rail vehicle,
having a coupling rod (2) that can be coupled to a carriage body of a vehicle via a drawbar (4) and an energy dissipation device (6) that can be arranged between the end region on the carriage-body side of the coupling rod (2) and the carriage body, wherein the energy dissipation device (6) is designed in such a way that the force flow of the compressive and impact forces transmitted from the coupling rod to the energy dissipation device and tensile forces transmitted via the drawbar is led at least partly through this device and is transmitted to the carriage body via stop areas (13, 14) for the introduction of tensile forces and/or compressive forces on the carriage body or on a component connected at least indirectly to the latter,
**characterized in that**
the energy dissipation device (6) comprises a reversible energy dissipation device (7) and an energy dissipation device (10) with irreversible energy dissipation, wherein the energy dissipation device (6) is designed in such a way that the force flow of the tensile forces transmitted to the latter from the coupling rod is led only through the reversible energy dissipation device (7) and
the force flow of the compressive forces transmitted to the energy dissipation device from the coupling rod is led through the reversible energy dissipation device (7) and the energy dissipation device (10) with irreversible energy dissipation, wherein the energy dissipation device (10) with irreversible energy dissipation is arranged in series with the reversible energy dissipation device in the impact force flow direction.

2. Pulling and buffering means (5) according to Claim 1,
**characterized in that**
the energy dissipation device (10) with irreversible energy dissipation is deformed irreversibly or destroyed when a predefined maximum impact force is exceeded.

3. Pulling and buffering means (5) according to either of Claims 1 and 2,
**characterized in that**
the reversible energy dissipation device (7) and the energy dissipation device (10) with irreversible energy dissipation are arranged coaxially with each other.

4. Pulling and buffering means (5) according to one of the preceding claims,
**characterized in that**
the reversible energy dissipation device (7) or a component accommodating the latter, viewed at least over part of its extent in the longitudinal direction of the pulling and buffering means (5), is guided on/in the energy dissipation device (10) with irreversible energy dissipation.

5. Pulling and buffering device (5) according to one of the preceding claims,
**characterized in that**
a shear-off device (18) is provided between the reversible energy dissipation device (7) and the energy dissipation device (10) with irreversible energy dissipation, and is designed and arranged in such a way as to respond when a maximum permissible impact force is exceeded and to act destructively on the energy dissipation device (10) with irreversible energy dissipation.

6. Pulling and buffering means (5) according to one of the preceding claims,
**characterized in that**
an intermediate unit (17) is arranged between the reversible energy dissipation device (7) and the energy dissipation device (10) with irreversible energy dissipation, and forms a supporting surface for the reversible energy dissipation device (7) and a supporting surface for the energy dissipation device (10) with irreversible energy dissipation, wherein the intermediate unit (17) and the energy dissipation device (10) with irreversible energy dissipation function as a supporting unit for the reversible energy dissipation device (7) until a maximum permissible impact force is reached and, when the maximum permissible impact force is exceeded, the shear-off device (18) is activated and/or acts destructively on the energy dissipation device (10) with irreversible energy dissipation.

7. Pulling and buffering means (5) according to Claim 6,
**characterized in that**
the intermediate unit (17) comprises an intermediate element having a conical surface to interact with the energy dissipation device (10) with irreversible energy dissipation.

8. Pulling and buffering means (5) according to one of the preceding claims,
**characterized in that**
the energy dissipation device (6), viewed in the installed position in the longitudinal direction of the coupling rod (2), has a front transmission element (11) on the vehicle side and a rear transmission element (12) on the vehicle side, between which the reversible energy dissipation device (7) is arranged in a preloaded manner.

9. Pulling and buffering means (5) according to one of the preceding claims,
**characterized in that**
the reversible energy dissipation device (7) is arranged in a preloaded manner within the housing of the drawbar.

10. Pulling and buffering means (5) according to one of the preceding claims,
**characterized in that**
the reversible energy dissipation device (7) comprises at least one or a plurality of reversible energy dissipation elements which are connected in series or in parallel with regard to the guidance of the force flow.

11. Pulling and buffering means (5) according to Claim 10,
**characterized in that**
the reversible energy dissipation device (7) comprises at least one polymer spring.

12. Pulling and buffering means (5) according to one of the preceding claims,
**characterized in that**
the energy dissipation device (10) with irreversible energy dissipation comprises a plurality of destructive deformation elements, which are connected in series or in parallel with regard to the guidance of the force flow.

13. Pulling and buffering means (5) according to one of the preceding claims,
**characterized in that**
the energy dissipation device (10) with irreversible energy dissipation comprises at least one destructive deformation element,
which is formed as an element from the following group of elements
- a deformation body
- a deformation tube (16) or
- a honeycomb structure.

14. Pulling and buffering means (5) according to Claim 13,
**characterized in that**
the deformation tube is supported directly on a stop area on the carriage body or a component connected to the latter.

15. Pulling and buffering means (5) according to Claim 13 or 14,
**characterized in that**
the reversible energy dissipation device and/or the housing accommodating the reversible energy dissipation device, viewed in the longitudinal direction, is guided in the deformation tube at least partly within the area of extent of the latter.

16. Pulling and buffering means (5) according to either of Claims 14 and 15,
**characterized in that**
the deformation tube (16) is formed as a hollow profile element, at least over a subregion of its axial extent, wherein the cross section of the hollow profile is chosen from the following group of profiles:
- tube
- box
- polygon.

17. Pulling and buffering means (5) according to one of the preceding claims,
**characterized in that**
the stops or stop areas for the introduction of tensile forces and/or compressive forces on the carriage body are arranged on a guide (8) that can be connected to the carriage body, wherein the guide is preferably formed by a profile element.

18. Track-bound vehicle, in particular rail vehicle having a pulling and buffering means (5) with a coupling rod (2) coupled to a carriage body of a vehicle via a drawbar (4) and an energy dissipation device (6) arranged between the end region of the coupling rod (2) on the carriage-body side and the carriage body according to one of Claims 1 to 17.

## Revendications

1. Dispositif de traction et de poussée (5) destiné à un véhicule sur rails, en particulier un véhicule ferroviaire, ledit dispositif comprenant
une barre d'accouplement (2) qui peut être accouplée à la carrosserie d'un véhicule par le biais d'un étrier de traction (4) et un dispositif d'absorption d'énergie (6) qui peut être disposé entre la zone d'extrémité côté carrosserie de la barre d'accouplement (2) et la carrosserie, le dispositif d'absorption d'énergie (6) étant conçu de manière à ce que le flux des forces de compression ou de poussée qui lui sont transmises par la barre d'accouplement et des forces de traction transmises par le biais de l'étrier de traction est guidé au moins partiellement à travers celui-ci et transmis à la carrosserie par le biais de zones de butée (13, 14) destinées à l'introduction de forces de traction et/ou de forces de compression au niveau de la carrosserie ou d'un composant qui lui est relié au moins indirectement,
**caractérisé en ce que**
le dispositif d'absorption d'énergie (6) comprend un dispositif d'absorption d'énergie réversible (7) et un dispositif d'absorption d'énergie (10) à absorption d'énergie irréversible,
le dispositif d'absorption d'énergie (6) étant conçu de manière à ce que le flux des forces de traction transmises par la barre d'accouplement à celui-ci est dirigé uniquement à travers le dispositif d'absorption d'énergie réversible (7) et
le flux des forces de compression transmises par la barre d'accouplement à celui-ci est dirigé à travers le dispositif d'absorption d'énergie réversible (7) et le dispositif d'absorption d'énergie (10) à absorption d'énergie irréversible,
le dispositif d'absorption d'énergie (10) à absorption d'énergie irréversible est disposé en série avec le dispositif d'absorption d'énergie réversible dans la direction de flux de forces de poussée.

2. Dispositif de traction et de poussée (5) selon la revendication 1,
**caractérisé en ce que**
le dispositif d'absorption d'énergie (10) est déformé ou détruit de manière irréversible avec une absorption d'énergie irréversible lorsqu'une force de poussée maximale prédéfinie est dépassée.

3. Dispositif de traction et poussée (5) selon l'une des revendications 1 à 2,
**caractérisé en ce que**
le dispositif d'absorption d'énergie réversible (7) et le dispositif d'absorption d'énergie (10) à absorption d'énergie irréversible sont disposés coaxialement l'un à l'autre.

4. Dispositif de traction et de poussée (5) selon l'une des revendications précédentes,
**caractérisé en ce que**
le dispositif d'absorption d'énergie réversible (7) ou un composant recevant celui-ci est guidé sur/dans le dispositif d'absorption d'énergie (10) à absorption d'énergie irréversible au moins sur une partie de son extension dans la direction longitudinale du dispositif de traction et de poussée (5).

5. Dispositif de traction et de poussée (5) selon l'une des revendications précédentes,
**caractérisé en ce que**
un dispositif de cisaillement (18) est prévu entre le dispositif d'absorption d'énergie réversible (7) et le dispositif d'absorption d'énergie (10) à absorption d'énergie irréversible, lequel dispositif de cisaillement est conçu et disposé de manière à réagir lorsqu'une force de poussée maximale admissible est dépassée et à avoir une action destructive sur le dispositif d'absorption d'énergie (10) à absorption d'énergie irréversible.

6. Dispositif de traction et de poussée (5) selon l'une des revendications précédentes,
**caractérisé en ce que**
une unité intermédiaire (17) est disposée entre le dispositif d'absorption d'énergie réversible (7) et le dispositif d'absorption d'énergie (10) à absorption d'énergie irréversible, laquelle unité intermédiaire forme une surface d'appui destinée au dispositif d'absorption d'énergie réversible (7) et une surface d'appui destinée au dispositif d'absorption d'énergie (10) à absorption d'énergie irréversible, l'unité intermédiaire (17) et le dispositif d'absorption d'énergie (10) à absorption d'énergie irréversible agissant comme une unité de support pour le dispositif d'absorption d'énergie réversible (7) jusqu'à ce qu'une force de poussée maximale admissible soit atteinte et le dispositif de cisaillement (18) étant actionné et/ou ayant une action destructive sur le dispositif d'absorption d'énergie (10) à absorption d'énergie irréversible lorsque la force de poussée maximale admissible est dépassée.

7. Dispositif de traction et de poussée (5) selon la revendication 6,
**caractérisé en ce que**
l'unité intermédiaire (17) comprend un élément intermédiaire comportant une surface conique et destiné à coopérer avec le dispositif d'absorption d'énergie (10) à absorption d'énergie irréversible.

8. Dispositif de traction et de poussée (5) selon l'une des revendications précédentes,
**caractérisé en ce que**
le dispositif d'absorption d'énergie (6) comporte dans la position de montage, dans la direction longitudinale de la barre d'accouplement (2), un élément de transmission avant côté véhicule (11) et un élément de transmission arrière côté véhicule (12) entre lesquels le dispositif d'absorption d'énergie réversible (7) est disposé de manière précontrainte.

9. Dispositif de traction et de poussée (5) selon l'une des revendications précédentes,
**caractérisé en ce que**
le dispositif d'absorption d'énergie réversible (7) est disposé de manière précontrainte à l'intérieur du boîtier de l'étrier de traction.

10. Dispositif de traction et de poussée (5) selon l'une des revendications précédentes,
**caractérisé en ce que**
le dispositif d'absorption d'énergie réversible (7) comprend au moins un ou plusieurs éléments d'absorption d'énergie réversibles qui sont montés en série ou en parallèle en termes de guidage du flux de forces.

11. Dispositif de traction et de poussée (5) selon la revendication 10,
**caractérisé en ce que**
le dispositif d'absorption d'énergie réversible (7) comporte au moins un ressort polymère.

12. Dispositif de traction et de poussée (5) selon l'une des revendications précédentes,
**caractérisé en ce que**
le dispositif d'absorption d'énergie (10) à absorption d'énergie irréversible comprend une pluralité d'éléments de déformation destructive qui sont montés en série ou en parallèle en termes de guidage du flux de forces.

13. Dispositif de traction et de poussée (5) selon l'une des revendications précédentes,
**caractérisé en ce que**
le dispositif d'absorption d'énergie (10) à absorption d'énergie irréversible comprend au moins un élément de déformation destructive qui est conçu comme un élément du groupe d'éléments suivant
- un corps de déformation
- un tube de déformation (16) ou
- une structure en nid d'abeille.

14. Dispositif de traction et de poussée (5) selon la revendication 13,
**caractérisé en ce que**
le tube de déformation s'appuie directement sur une zone de butée sur la carrosserie ou sur un composant relié à celle-ci.

15. Dispositif de traction et de poussée (5) selon la revendication 13 ou 14,
**caractérisé en ce que**
le boîtier recevant le dispositif d'absorption d'énergie réversible et/ou le boîtier recevant le dispositif d'absorption d'énergie réversible, dans la direction longitudinale, est guidé au moins partiellement dans le tube de déformation dans la zone d'extension de celui-ci.

16. Dispositif de traction et de poussée (5) selon l'une des revendications 14 à 15,
**caractérisé en ce que**
le tube de déformation (16) est conçu sous la forme d'un élément profilé creux au moins sur une partie de son extension axiale, la section transversale du profilé creux étant choisie dans le groupe de profilés suivant :
- tube
- cube
- polygone.

17. Dispositif de traction et de poussée (5) selon l'une des revendications précédentes,
**caractérisé en ce que**
les butées ou zones de butée destinées à l'introduction de forces de traction et/ou de forces de compression sur la carrosserie sont disposées sur un guide (8) qui peut être relié à la carrosserie, le guide étant formé de préférence par un élément profilé.

18. Véhicule sur rails, en particulier véhicule ferroviaire, comprenant un dispositif de traction et de poussée (5) comprenant une barre d'accouplement (2) accouplée à une carrosserie d'un véhicule par le biais d'un étrier de traction (4) et un dispositif d'absorption d'énergie (6) selon l'une des revendications 1 à 17 disposé entre la zone d'extrémité côté carrosserie de la barre d'accouplement (2) et la carrosserie.
